# FASCICULE DE BREVET EUROPEEN

(11) **EP 2 367 264 B1**
(45) Date de publication et mention de la délivrance du brevet: **06.03.2019**
(21) Numéro de dépôt: 11305296.3
(22) Date de dépôt: 17.03.2011
(51) Int. Cl.: H02K 1/14, H02K 15/06, H02K 7/18

(54) **Machine électrique tournante avec stator à bobinages concentriques**
Rotierende elektrische Maschine mit Stator mit konzentrierten Wicklungen
Rotating electrical machine with stator having concentrated windings

(30) Priorité: 17.03.2010 FR 1051884
(43) Date de publication de la demande: 21.09.2011
(73) Titulaire: GE Energy Power Conversion Technology Limited, Rugby Warwickshire CV21 1BU (GB)
(72) Inventeur: Gazin, Christophe, 54670 Custines (FR)
(74) Mandataire: Serjeants LLP

(56) Documents cités:
- EP-A2- 0 627 805
- EP-A2- 2 066 005
- FR-A1- 2 883 430
- US-A1- 2006 071 574
- US-A1- 2010 007 236

## Description

US2006/0131985 décrit une machine électrique tournante comprenant un rotor sensiblement cylindrique ayant un axe central et un stator, le stator comprenant :
- une carcasse ayant une virole cylindrique coaxiale à l'axe central ;
- une pluralité de dents axiales réparties autour de l'axe central, les dents définissant entre elles des encoches axiales ;
- une pluralité de bobinages concentriques, chacun bobiné autour d'une dent qui lui est propre sans imbrication avec les autres bobinages, chaque bobinage s'étendant dans les deux encoches encadrant la dent correspondante.

Le stator comprend une fixation amovible de chaque dent à la virole de la carcasse, le stator étant agencé pour que chaque dent puisse être extraite hors du stator avec le bobinage correspondant selon un mouvement axial, après libération de la fixation de ladite dent à la virole de la carcasse. Au moins certaines dents sont fixées à la virole de la carcasse par au moins une vis.

L'invention concerne selon un premier aspect en général les machines électriques tournantes selon la revendication 1.

Dans ce contexte, l'invention vise à proposer une machine électrique tournante dont la maintenance est facilitée.

La machine peut également présenter une ou plusieurs des caractéristiques ci-dessous, considérées individuellement ou selon toutes les combinaisons techniquement possibles :
- la fixation d'au moins certaines dents à la carcasse comprend au moins une goupille ;
- en suivant la circonférence du stator, les fixations amovibles des dents sont alternativement des vis et/ou des goupilles, et des cales conformées pour solliciter la dent radialement contre la carcasse ;
- le rotor comprend un nombre de pôles déterminé, le stator comportant un nombre d'encoches par pôle et par phase inférieur à 1, de préférence inférieur à 0,5 ; et
- le stator est agencé pour que chaque dent puisse être extraite hors du stator selon un mouvement exclusivement axial.

Selon un second aspect, l'invention porte sur un procédé de remplacement d'une dent de stator défectueuse dans une machine électrique présentant les caractéristiques ci-dessus, le procédé comprenant les étapes suivantes :
- déconnexion du bobinage de la dent défectueuse vis-à-vis des autres bobinages ;
- libération de la fixation de la dent défectueuse à la carcasse ;
- extraction de la dent défectueuse hors du stator avec le bobinage correspondant selon un mouvement axial ;
- mise en place d'une nouvelle dent à la place de la dent défectueuse dans le stator avec un bobinage selon un mouvement axial ;
- fixation de la nouvelle dent à la carcasse ;
- connexion du bobinage de la nouvelle dent aux autres bobinages.

Toutes ces opérations peuvent être réalisées sans démontage du rotor.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue en coupe partielle d'une machine électrique selon l'invention, la coupe étant prise dans un plan perpendiculaire à l'axe central du rotor ;
- la figure 2 est une vue en coupe d'une dent de stator d'un premier type et de son bobinage associé, prise dans un plan perpendiculaire à l'axe central du rotor ;
- la figure 3 est une vue en perspective d'une dent et de son bobinage, ainsi que de la fixation correspondante ;
- la figure 4 est une vue agrandie en coupe d'une moitié d'une dent d'un second type, montrant en outre la constitution du bobinage ;
- les figures 5 à 7 sont des vues en perspective illustrant différentes étapes d'une opération de remplacement d'une dent défectueuse du rotor de la figure 1.

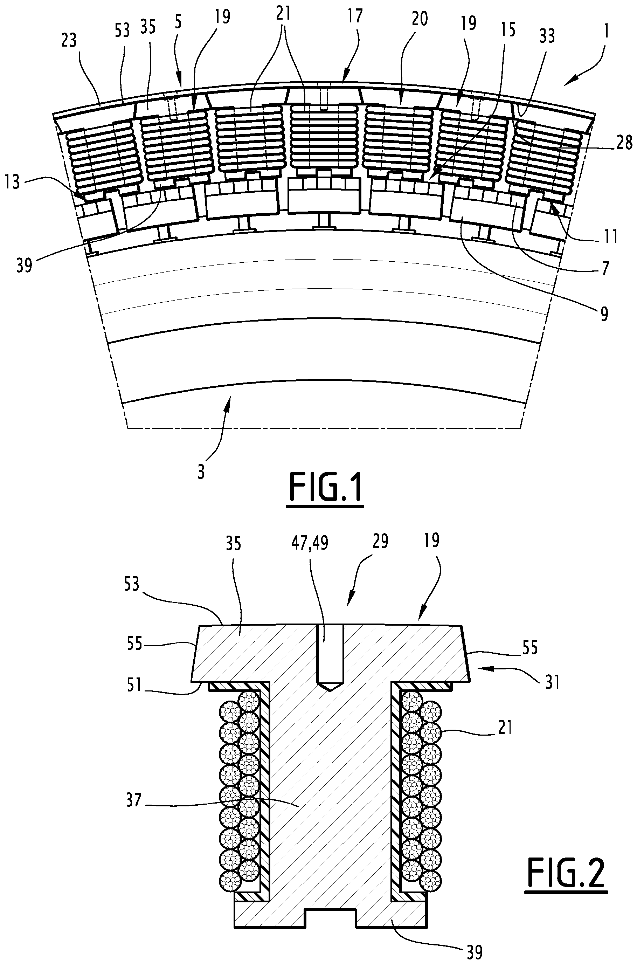

La machine électrique tournante 1 représentée sur la figure 1 comporte un rotor 3 et un stator 5 entourant le rotor 3. Dans une variante non représentée, le stator occupe le centre de la machine, le rotor entourant le stator.

La machine électrique tournante peut être de type synchrone ou asynchrone. Le rotor 3 peut être un paquet de tôles magnétiques ou comporter une pluralité de barreaux de cuivre, dans le cas d'une machine asynchrone. Dans le cas d'une machine synchrone, le rotor 3 peut comporter une pluralité de pôles bobinés, ou une pluralité d'aimants permanents. Dans l'exemple de réalisation de la figure 1, la machine est une machine synchrone, dont le rotor 3 comporte une pluralité de pôles 7 chacun équipé d'aimants permanents 9.

Dans l'exemple de la figure 1, le rotor 3 est monté rotatif dans le stator 5, autour de son axe central X.

Le stator 5 présente alors une forme générale cylindrique, d'axe central X. Il est délimité radialement vers l'intérieur par une face interne cylindrique 11. Le rotor 3 est délimité radialement vers l'extérieur par une face externe 13 sensiblement cylindrique sur laquelle sont placés les pôles 7. Le diamètre de la face interne 11 du stator est très légèrement supérieur au diamètre de la face externe 13 du rotor, de telle sorte qu'un entrefer 15 de faible épaisseur sépare les faces 11 et 13 l'une de l'autre.

Le stator 5 comporte une carcasse 17, une pluralité de dents axiales 19,20 réparties autour de l'axe central X, et une pluralité de bobinages concentriques 21, chacun bobiné autour d'une dent 19,20 qui lui est propre.

Dans l'exemple de la figure 1, sont installés 2 types de dents : 19 et 20, différents par leur principe de fixation dans la carcasse 17. D'autres principes de fixation peuvent être envisagés.

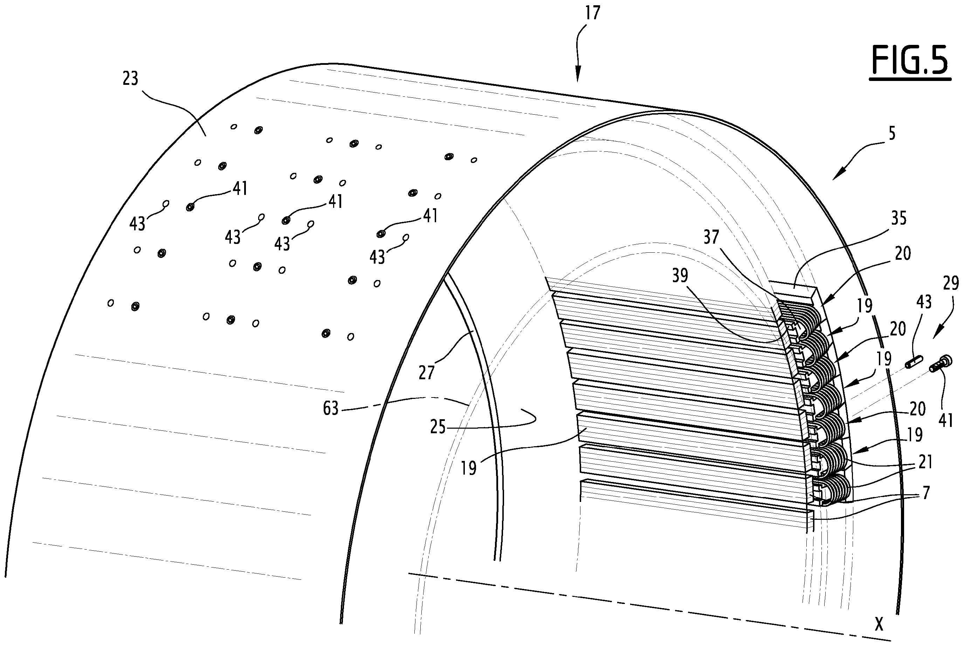

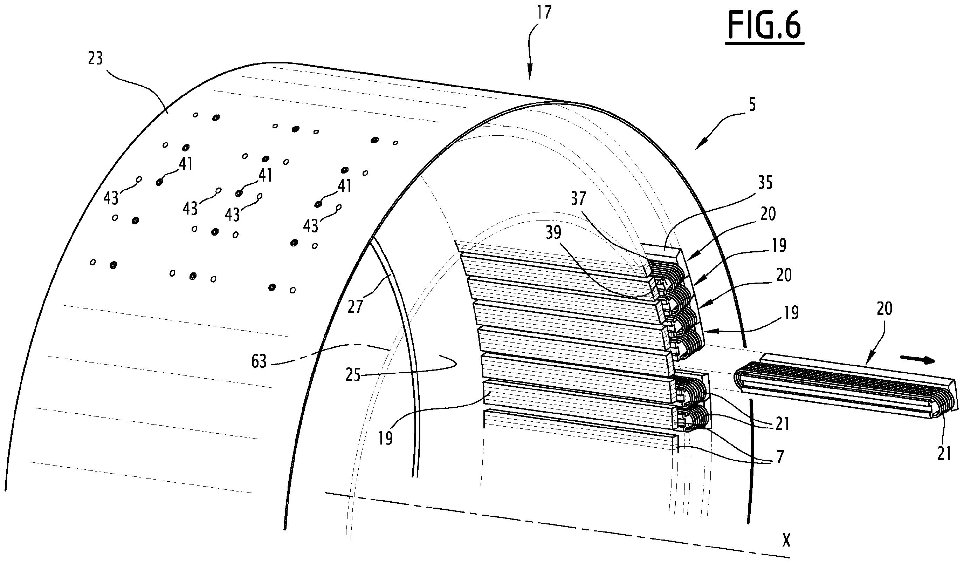

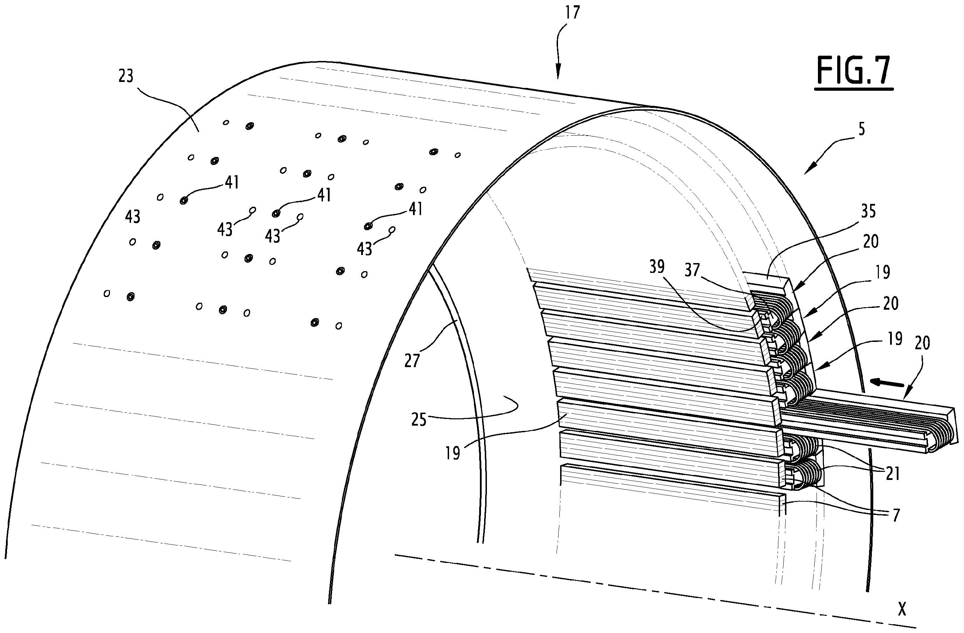

La carcasse 17 comporte une virole cylindrique 23 d'axe central X, et un premier fond annulaire 25 sensiblement perpendiculaire à l'axe X (voir figures 5 à 7). Le fond annulaire 25 est solidaire d'une extrémité axiale de la virole 23 et centré sur l'axe X. Il délimite intérieurement une ouverture circulaire 27.

Les dents 19,20 présentent chacune une forme allongée axialement. Les dents 19, 20 sont répartis circonférentiellement autour de l'axe central X, et définissent entre elles des encoches axiales 28 de réception des bobinages 21. Les encoches 28 sont allongées parallèlement à l'axe X et sont elles-aussi réparties autour de l'axe central X. Elles sont fermées radialement vers l'extérieur, c'est-à-dire vers la carcasse 17, et sont ouvertes radialement vers l'intérieur. Elles débouchent dans l'entrefer 15.

Dans l'exemple de réalisation représenté sur les figures, les dents 19, 20 des deux types sont placées radialement vers l'intérieur de la carcasse 17. Dans le cas où le rotor est placé autour du stator, les dents de stator sont placées radialement vers l'extérieur de la carcasse.

Le stator 5 comporte par ailleurs une fixation amovible 29, 31 de chaque dent 19, 20 à la carcasse 17, et plus précisément à la face radialement interne 33 de la virole 23.

La fixation 29 des dents 19 est différente de la fixation 31 des dents 20, comme expliqué plus loin, les dents 19 et 20 étant de ce fait de deux types différents.

Dans l'exemple de la figure 1, les dents 19 et 20 des deux types alternent circonférentiellement autour de l'axe X.

Comme visible sur la figure 2, chaque dent 19, 20 comporte une base 35 plaquée contre la face interne 33 de la virole, une âme centrale 37 autour de laquelle est bobiné le bobinage 21 correspondant, et une extrémité 39. L'âme 37 est orientée sensiblement radialement. La base 35 est solidaire d'une extrémité radialement externe de l'âme 37, l'extrémité 39 étant formée d'un côté radialement interne de l'âme 37. L'extrémité 39 fait saillie circonférentiellement de part et d'autre de l'âme 37 et ferme partiellement les encoches 28 encadrant la dent.

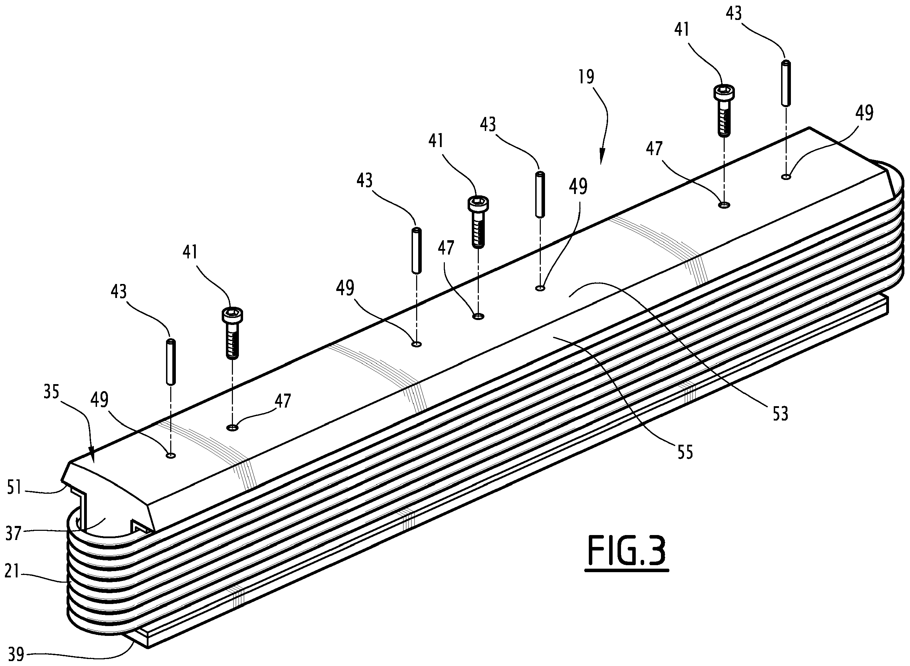

La fixation 29 de chaque dent 19 du premier type comporte une pluralité de vis 41, et une pluralité de goupilles 43, comme visible sur la figure 3. Dans l'exemple de réalisation des figures 1 à 7, la fixation 29 comporte pour chaque dent trois vis 41 et quatre goupilles 43, réparties axialement sur la longueur de la dent.

Pour assurer la fixation de la dent 19 à la virole 23 de la carcasse, ladite virole comporte des orifices 44, 45 pour le passage respectivement des vis 41 et des goupilles 43, la dent présentant des trous borgnes 47, 49 placés en correspondance avec les orifices 44, 45. Les vis 41 sont engagées à partir de l'extérieur de la carcasse, suivant une direction radiale à travers les orifices 44 et sont vissées dans les trous borgnes taraudés 47. Les goupilles 43 sont engagées en force dans les orifices 45 et dans les trous borgnes 49, à partir de l'extérieur de la carcasse et selon une direction radiale.

Comme visible sur la figure 2, la base 35 de chaque dent 19 est délimitée radialement vers l'intérieur par une surface 51 formant le fond des encoches 28 encadrant la dent, vers l'extérieur par une surface 53 plaquée contre la virole, et circonférentiellement par deux surfaces latérales 55 opposées l'une à l'autre. Considérée en coupe comme sur la figure 2, chaque surface latérale 55 est légèrement inclinée par rapport à la direction radiale. Plus précisément, quand on suit la surface 55 à partir de la face 53 vers la face 51, la surface 55 s'écarte de la direction radiale vers l'extérieur de la dent, c'est-à-dire vers la dent voisine. La surface 55 forme avec la direction radiale un angle compris entre 2 et 10°, par exemple compris entre 3 et 7°, et valant typiquement 5°.

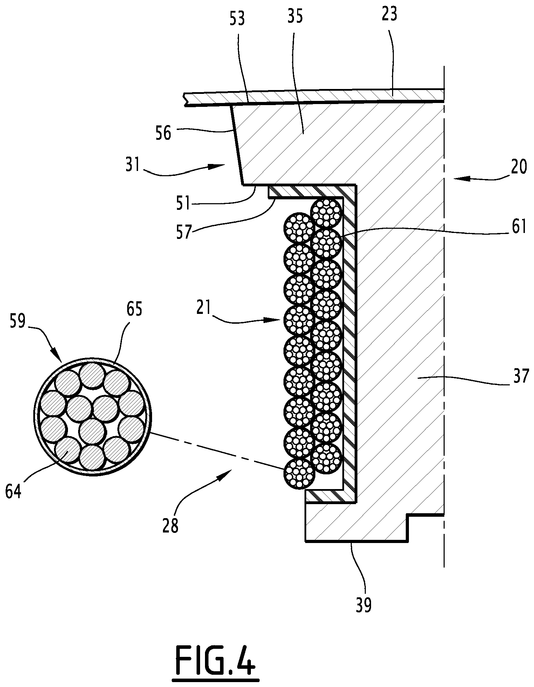

Une dent 20 du second type est illustrée partiellement sur la figure 4. Comme indiqué plus haut, chaque dent 20 est encadrée par deux dents 19 et réciproquement chaque dent 19 est encadrée par deux dents 20. Chaque dent 20 est en contact par les surfaces latérales 56 de sa base 35 avec les surfaces 55 des bases 35 des deux dents 19 qui l'encadrent. Ainsi, les surfaces latérales 56 de chaque dent 20 présentent des orientations complémentaires des surfaces latérales 55 des dents 19. Plus précisément, comme visible sur la figure 4, chacune des deux surfaces latérales 56 de la base de la dent 20 est inclinée par rapport à la direction radiale, mais cette inclinaison est opposée à celle de la surface 55 des dents 19. La surface 56 d'une dent 20, quand on la suit à partir de la face externe 53 vers la face interne 51, forme un angle rentrant par rapport à la direction radiale, c'est-à-dire incliné vers l'intérieur de la dent 20, à l'opposé de la dent 19 voisine.

On comprend donc que la fixation 31 de chaque dent 20 à la carcasse est constituée par les surfaces latérales 55 des deux dents 19 qui l'encadrent. En effet, les dents 19 sont sollicitées radialement contre la carcasse 17 par les vis 41 et les goupilles 43. Cette sollicitation est transmise aux dents 20 par l'intermédiaire des faces latérales sortantes 55 des dents 19 venant en appui contre les surfaces latérales rentrantes 56 des dents 20. Les surfaces latérales sortantes 55 des dents 19 constituent ainsi des cales qui sollicitent les surfaces latérales rentrantes 56 des dents 20 radialement vers l'extérieur, contre la carcasse 17.

Les tolérances de fabrication et de montage des différents éléments du stator, les matériaux constituant ces éléments, l'orientation des surfaces 55, le couple de serrage des vis 47, sont choisis de telle sorte que les dents 20 soient fermement maintenues en position vis-à-vis de la carcasse 17. L'effort appliqué par les surfaces latérales sortantes 55 est dimensionné pour que les dents 20 soient fixées à la carcasse et restent en place compte tenu des efforts subis par la dent 20.

Comme visible sur la figure 4, le stator 5 comporte un revêtement électriquement isolant 57 sur toutes les surfaces délimitant chaque encoche 28.

Chaque bobinage 21 est de type concentrique, c'est-à-dire est bobiné autour d'une dent unique. Chaque bobinage 21 comporte typiquement un conducteur 59, enroulé autour de l'âme 37 de la dent correspondante (figure 4). Le conducteur 59 comporte ainsi plusieurs portions rectilignes 61 disposées dans les deux encoches encadrant la dent correspondante, et plusieurs portions dépassant axialement de part et d'autre de la dent. Les portions rectilignes 61 sont par exemple rangées dans chacune des encoches en une ou plusieurs couches, par exemple deux couches comme illustré sur la figure 4, trois couches ou plus de trois couches. Le conducteur 59 comporte une pluralité de fils de cuivre 64 logés à l'intérieur d'une gaine périphérique 65, isolante électriquement.

Le bobinage 21 est de type sans imbrication avec les autres bobinages. Ceci signifie que le conducteur 59, au niveau des portions cintrées dépassant axialement de la dent, ne croise pas ou n'est pas imbriqué avec le conducteur d'un autre bobinage.

Chaque bobinage 21 est raccordé électriquement avec d'autres bobinages par l'intermédiaire de connexions, de manière à former plusieurs phases. Toutefois, ces connexions sont réalisées en dehors des encoches, à des endroits aisément accessibles en vue de réaliser la maintenance du stator.

Dans la machine tournante décrite ci-dessus, le nombre de dents de stators est proche du nombre de pôles du rotor, notamment dans le cas d'une machine triphasée. Ceci favorise une concentration plus efficace du flux magnétique traversant les bobinages du stator. Par ailleurs, le nombre d'encoches 28 par pôle du rotor et par phase du stator est inférieur à un, de préférence inférieur à 0,5.

On va maintenant décrire le procédé de remplacement d'une dent de stator défectueuse dans la machine électrique décrite ci-dessus.

Le procédé comporte les étapes successives suivantes :
- déconnexion du bobinage 21 de la dent défectueuse 19, 20 vis-à-vis des autres bobinages 21 ;
- libération de la fixation 29, 31 de la dent défectueuse 19, 20 à la carcasse 17 ;
- extraction de la dent défectueuse 19, 20 hors du stator 5 avec le bobinage 21 correspondant, selon un mouvement axial ;
- mise en place d'une nouvelle dent 19, 20 à la place de la dent défectueuse dans le stator 5, avec son bobinage 21, selon un mouvement axial ;
- fixation de la nouvelle dent 19, 20 à la carcasse 17 ;
- connexion du bobinage 21 de la nouvelle dent 19, 20 aux autres bobinages 21.

L'étape de déconnexion du bobinage de la dent défectueuse est effectuée typiquement en isolant le bobinage de la dent défectueuse des autres bobinages. Les connexions sont généralement de type brasé, boulonné, ou de tout autre type adapté. L'étape de libération de la fixation de la dent défectueuse est effectuée de manière différente suivant le type de la dent défectueuse. Si la dent est fixée à la carcasse par des vis et des goupilles, les vis sont dévissées par l'extérieur de la carcasse, et les goupilles sont extraites des logements borgnes 49 et des orifices 45, à l'aide d'un outil adapté.

Si la dent est au contraire du deuxième type, fixée par l'intermédiaire des faces latérales sortantes des dents voisines, les fixations des dents 19 voisines sont partiellement libérées de manière à réduire la sollicitation exercée par les faces latérales sortantes sur la dent défectueuse 20. Par exemple, les vis 41 de fixation des dents voisines sont partiellement dévissées. Les goupilles 43 de fixation des dents voisines sont partiellement extraites de leur logement borgne 49. Quand la contrainte exercée par les faces latérales sortantes 55 est suffisamment faible, la dent défectueuse 20 peut être extraite axialement du stator.

Quel que soit le type de la dent défectueuse, celle-ci est extraite selon un mouvement axial, suivant une direction opposée au fond annulaire 25. On entend ici par extraire la dent du stator le fait de dégager complètement la dent défectueuse de l'intervalle délimité par les deux dents qui l'encadrent. Par le même mouvement, la dent est sortie du volume interne de la carcasse 17. L'extraction de la dent hors de l'intervalle se fait selon un mouvement de translation exclusivement axial, sans composante radiale et sans rotation.

La mise en place de la nouvelle dent munie de son bobinage 21 est effectuée suivant un mouvement exactement inverse au mouvement d'extraction de la dent défectueuse.

La fixation de la nouvelle dent à la carcasse est effectuée en serrant les vis de fixation 41 et en engageant en force les goujons 43 de la fixation associée à ladite dent quand cette dent est du premier type. Quand la dent est du deuxième type, la fixation est effectuée en serrant les vis 41 et en engageant complètement les goujons 43 des fixations des deux dents 19 voisines.

On assure ensuite la connexion du bobinage de la nouvelle dent avec un autre bobinage électrique.

La machine électrique tournante décrite ci-dessus présente de multiples avantages.

Du fait que le stator comprend une fixation amovible de chaque dent à la carcasse, le stator étant agencé pour que chaque dent puisse être extraite hors du stator avec le bobinage correspondant selon un mouvement axial, après libération de la fixation de ladite dent à la carcasse et déconnexion du bobinage correspondant vis-à-vis des autres bobinages, la maintenance du stator est considérablement facilitée. Notamment, il est particulièrement simple de remplacer une dent défectueuse. Il n'est pas nécessaire de démonter complètement d'autres dents du stator pour pouvoir extraire la dent défectueuse et la remplacer par une autre dent.

Fixer les dents par l'intermédiaire de vis et de goupilles permet de les monter et de les démonter de manière simple et rapide.

Dans la configuration préférentielle présentée précédemment, le fait que la fixation de certaines dents à la carcasse comprenne des cales conformées pour solliciter la dent radialement contre la carcasse permet de réaliser facilement la fixation de ces dents, sans avoir à percer des trous ou des orifices dans la carcasse et dans la dent à fixer. De manière avantageuse, ces cales peuvent être des surfaces des dents encadrant la dent à fixer. Ainsi, le nombre de pièces à prévoir pour la fixation des dents est réduit au minimum, de même que le nombre de trous et d'orifices à percer dans la carcasse et dans les dents.

Le fait que le nombre de dents du stator soit proche du nombre de pôles du rotor favorise une concentration plus efficace du flux magnétique traversant les bobinages du stator. Le nombre de bobinages dans le stator est moins important que sur d'autres machines électriques tournantes.

Les encoches sont ouvertes à leurs deux extrémités axiales et également radialement vers l'entrefer. De ce fait, le refroidissement des bobines est efficace et la masse de la partie active de la machine électrique peut être réduite de manière significative.

Par ailleurs, le fait d'utiliser des bobinages concentriques sans imbrication entre les bobinages permet de diminuer l'encombrement axial des bobinages, et d'extraire facilement chaque dent avec son bobinage.

La machine électrique tournante de l'invention est particulièrement adaptée à des utilisations à vitesse de rotation lente, par exemple dans un générateur électrique hydraulique, ou une éolienne en attaque directe ou semi directe.

La machine électrique tournante peut présenter de multiples variantes.

Dans le stator, les dents des deux types n'alternent pas nécessairement. D'autres arrangements sont possibles. On peut par exemple disposer successivement plusieurs dents fixées à l'aide de vis et de goupilles, puis une dent fixée par pression des dents voisines puis de nouveau plusieurs dents fixées par des vis et des goupilles, etc.

Les fixations amovibles des dents à la carcasse peuvent être de tout type. Ainsi, toutes les dents du stator peuvent être fixées à l'aide de vis et de goupilles. Les dents peuvent être fixées seulement à l'aide de vis ou seulement à l'aide de goupilles. Le nombre de vis et le nombre de goupilles peut être variable et différent du nombre indiqué ci-dessus.

Certaines dents peuvent être fixées directement sur la carcasse par une liaison du type queue d'aronde, l'un de la dent et de la carcasse portant un relief en queue d'aronde, et l'autre une rainure d'une forme complémentaire.

Alternativement, certaines dents peuvent être fixées indirectement sur la carcasse, par l'intermédiaire d'autres dents. Par exemple, certaines dents peuvent être fixées aux dents voisines par des dispositifs à queue d'aronde, les dents voisines étant quant à elles fixées directement à la carcasse, par exemple des vis et/ou des goujons.

## Revendications

1. Machine électrique tournante (1) comprenant un rotor (3) sensiblement cylindrique ayant un axe central (X) et un stator (5), le stator (5) comprenant :
- une carcasse (17) ayant une virole cylindrique (23) coaxiale à l'axe central (X) ;
- une pluralité de dents axiales (19, 20) réparties autour de l'axe central (X), les dents (19, 20) définissant entre elles des encoches axiales (28) ;
- une pluralité de bobinages concentriques (21), chacun bobiné autour d'une dent (19, 20) qui lui est propre sans imbrication avec les autres bobinages (21), chaque bobinage (21) s'étendant dans les deux encoches (28) encadrant la dent (19, 20) correspondante et étant électriquement raccordé à d'autres bobinages (21) par des connections ;
dans laquelle le stator (5) comprend une fixation (29, 31) amovible de chaque dent (19, 20) à la virole (23) de la carcasse (17), le stator (5) étant agencé pour que chaque dent (19, 20) puisse être extraite hors du stator (5) avec le bobinage (21) correspondant selon un mouvement axial, après libération de la fixation (29, 31) de ladite dent (19, 20) à la virole (23) de la carcasse (17) et déconnexion du bobinage (21) correspondant vis-à-vis des autres bobinages (21) ;
dans laquelle la fixation (29) d'au moins certaines dents (19) à la virole (23) de la carcasse (17) comprend au moins une vis (41) ;
dans laquelle la fixation (31) d'au moins certaines dents (20) à la virole (23) de la carcasse (17) comprend des cales conformées pour solliciter la dent (20) radialement contre la carcasse (17) ;
dans laquelle les cales destinées à solliciter une dent (20) déterminée contre la virole (23) de la carcasse (17) sont des surfaces (55) des deux dents (19) encadrant ladite dent (20) déterminée ; et
dans laquelle certaines dents (20) sont fixées à la virole (23) de la carcasse (17) seulement par les cales.

2. Machine électrique selon la revendication 1, **caractérisée en ce que** la fixation (29) d'au moins certaines dents (19) à la virole (23) de la carcasse (17) comprend au moins une goupille (43).

3. Machine électrique selon la revendication 1 ou 2, **caractérisée en ce que**, en suivant la circonférence du stator (5), les fixations (29, 31) amovibles des dents (19, 20) sont alternativement des vis (41) et/ou des goupilles (43), et des cales conformées pour solliciter la dent (20) radialement contre la virole (23) de la carcasse (17).

4. Machine électrique selon l'une quelconque des revendications précédentes, **caractérisée en ce que** le rotor (3) comprend un nombre de pôles déterminé, le stator (5) comportant un nombre d'encoches (28) par pôle et par phase inférieur à 1, de préférence inférieur à 0,5.

5. Machine électrique selon l'une quelconque des revendications précédentes, le stator (5) est agencé pour que chaque dent (19, 20) puisse être extraite hors du stator (5) selon un mouvement exclusivement axial.

6. Procédé de remplacement d'une dent (19, 20) de stator (5) défectueuse dans une machine électrique (1) selon l'une quelconque des revendications précédentes, le procédé comprenant les étapes suivantes :
- déconnection du bobinage (21) de la dent défectueuse (19, 20) vis-à-vis des autres bobinages (21) ;
- libération de la fixation (29, 31) de la dent défectueuse (19, 20) à la virole (23) de la carcasse (17) ;
- extraction de la dent défectueuse (19, 20) hors du stator (5) avec le bobinage (21) correspondant selon un mouvement axial ;
- mise en place d'une nouvelle dent (19, 20) à la place de la dent défectueuse (19, 20) dans le stator (5) avec un bobinage (21) selon un mouvement axial ;
- fixation de la nouvelle dent (19, 20) à la virole (23) de la carcasse (17) ;
- connexion du bobinage (21) de la nouvelle dent (19, 20) aux autres bobinages (21).

## Patentansprüche

1. Elektrische Rotationsmaschine (1), die einen im Wesentlichen zylindrischen Rotor (3) mit einer Mittelachse (X) und einen Stator (5) aufweist, wobei der Stator (5) aufweist:
- einen Rahmen (17) mit einem zu der Mittelachse (X) koaxialen zylindrischen Ring (23);
- mehrere axiale Zähne (19, 20), die um die Mittelachse (X) herum verteilt sind, wobei die Zähne (19, 20) zwischeneinander axiale Spalte (28) definieren;
- mehrere konzentrische Wicklungen (21), die jeweils um einen Zahn (19, 20), der zu ihr gehört, gewickelt sind, ohne mit den anderen Wicklungen (21) verschachtelt zu sein, wobei sich jede Wicklung (21) in den beiden Spalten (28) erstreckt, die den entsprechenden Zahn (19, 20) einfassen, und mit anderen Wicklungen (21) über Verbindungen elektrisch verbunden sind;
- wobei der Stator (5) eine lösbare Befestigung (29, 31) jedes Zahns (19, 20) an dem Ring (23) des Rahmens (17) aufweist, wobei der Stator (5) derart eingerichtet ist, dass jeder Zahn nach dem Lösen der Befestigung (29, 31) des Zahns (19, 20) an dem Ring (23) des Rahmens (17) und dem Trennen der entsprechenden Wicklung (21) von den anderen Wicklungen (21) in einer axialen Bewegung mit der entsprechenden Wicklung (21) aus dem Stator (5) herausgenommen werden kann;
- wobei die Befestigung (29) wenigstens bestimmter Zähne (19) an dem Ring (23) des Rahmens (17) wenigstens eine Schraube (41) aufweist;
- wobei die Befestigung (31) wenigstens bestimmter Zähne (20) an dem Ring (23) des Rahmens (17) Keile aufweisen, die geformt sind, um den Zahn (20) radial gegen den Rahmen (17) zu drücken;
wobei die Keile, die dazu bestimmt sind, einen bestimmten Zahn (20) gegen den Ring (23) des Rahmens (17) zu drücken, Flächen (55) der beiden Zähne (19) sind, die diesen bestimmten Zahn (20) einfassen; und
wobei bestimmte Zähne (20) nur durch die Keile an dem Ring (23) des Rahmens (17) fixiert sind.

2. Elektrische Maschine nach Anspruch 1, **dadurch gekennzeichnet, dass** die Befestigung (29) wenigstens bestimmter Zähne (19) an dem Ring (23) des Rahmens (17) wenigstens einen Stift (43) aufweist.

3. Elektrische Maschine nach Anspruch 1 oder 2, **dadurch gekennzeichnet, dass** in Umfangsrichtung des Stators (5) die lösbaren Befestigungen (29, 31) der Zähne (19, 20) abwechselnd Schrauben (41) und/oder Stifte (43) und Keile sind, die geformt sind, um den Zahn (20) radial gegen den Ring (23) des Rahmens (17) zu drücken.

4. Elektrische Maschine nach einem beliebigen der vorhergehenden Ansprüche, **dadurch gekennzeichnet, dass** der Rotor (3) eine bestimmte Anzahl von Polen aufweist, wobei der Stator (5) eine Anzahl von Spalten (28) pro Pol und pro Phase, die kleiner als 1, vorzugsweise kleiner als 0,5 ist, aufweist.

5. Elektrische Maschine nach einem beliebigen der vorhergehenden Ansprüche, wobei der Stator (5) derart eingerichtet ist, dass jeder Zahn (19, 20) in einer ausschließlich axialen Bewegung aus dem Stator (5) herausgezogen werden kann.

6. Verfahren zum Ersetzen eines defekten Zahns (19, 20) des Stators (5) in einer elektrischen Maschine (1) nach einem beliebigen der vorhergehenden Ansprüche, wobei das Verfahren die folgenden Schritte aufweist:
- Trennen der Wicklung (21) des defekten Zahns (19, 20) von den anderen Wicklungen (21);
- Lösen der Befestigung (29, 31) des defekten Zahns (19, 20) an dem Ring (23) des Rahmens (17);
- Herausnehmen des defekten Zahns (19, 20) aus dem Stator (5) mit der entsprechenden Wicklung (21) in einer axialen Bewegung;
- Einsetzen eines neuen Zahns (19, 20) anstelle des defekten Zahns (19, 20) in dem Stator (5) mit einer Wicklung (21) in einer axialen Bewegung;
- Befestigen des neuen Zahns (19, 20) an dem Ring (23) des Rahmens (17);
- Verbinden der Wicklung (21) des neuen Zahns (19, 20) mit den anderen Wicklungen (21).

## Claims

1. Rotating electrical machine (1) with a substantially cylindrical rotor (3) having a central axis (X) and with a stator (5), wherein the stator (5) comprises:
- a frame (17) with a cylindrical shroud (23) coaxial to the central axis (X);
- a plurality of axial teeth (19, 20) distributed around the central axis (X), the teeth defining axial notches (28) between them;
- a plurality of concentric windings (21) each wound around a specific individual tooth (19, 20) without intertwining with the other windings (21), each winding (21) extending into the two notches (28) framing the corresponding tooth (19, 20) and being electrically connected to other windings (21) by connections;
wherein the stator (5) comprises a removable fixing (29, 31) for attaching each tooth (19, 20) to the shroud (23) of the frame (17), the stator being arranged such that each tooth (19, 20) may be extracted from the stator (5) with the corresponding winding (21) in an axial movement after release of the fixing (29, 31) attaching said tooth (19, 20) to the shroud (23) of the frame (17) and after disconnection of the corresponding winding (21) from the other windings (21);
wherein the fixing (29) of at least certain teeth (19) to the shroud (23) of the frame (17) comprises at least one screw (41);
wherein the fixing (31) of at least certain teeth (20) to the shroud (23) of the frame (17) comprises wedges shaped to press the tooth (20) radially against the shroud (17); wherein the wedges intended to press a specific tooth (20) against the shroud (23) of the frame (17) are surfaces (55) of the two teeth (19) framing said specific tooth (20); and
wherein certain teeth (20) are attached to the shroud (23) of the frame (17) solely by the wedges.

2. Electrical machine according to claim 1, **characterised in that** the fixing (29) of at least certain teeth (19) to the shroud (23) of the frame (17) comprises at least one pin (43).

3. Electrical machine according to claim 1 or 2, **characterised in that** following the circumference of the stator (5), the removable fixings (29, 31) of the teeth (19, 20) are alternately screws (41) and/or pins (43), and wedges shaped to press the tooth (20) radially against the shroud (23) of the frame (17).

4. Electrical machine according to any of the preceding claims, **characterised in that** the rotor (3) comprises a specific number of poles, the stator (5) comprising a number of notches (28) per pole and per phase which is less than 1, preferably less than 0.5.

5. Electrical machine according to any of the preceding claims, wherein the stator (5) is arranged such that each tooth (19, 20) may be extracted from the stator (5) in an exclusively axial movement.

6. Method for replacing a faulty tooth (19, 20) of the stator (5) in an electrical machine (1) according to any of the preceding claims, the method comprising the following steps:
- disconnecting the winding (21) of the faulty tooth (19, 20) from the other windings (21);
- releasing the fixing (29, 31) attaching the faulty tooth (19, 20) to the shroud (23) of the frame (17);
- extracting the faulty tooth (19, 20) with the corresponding winding (21) from the stator (5) in an axial movement;
- positioning a new tooth (19, 20) with a winding (21) in the stator (5) in the place of the faulty tooth (19, 20) in an axial movement;
- fixing the new tooth (19, 20) to the shroud (23) of the frame (17);
- connecting the winding (21) of the new tooth (19, 20) to the other windings (21).
